# EUROPEAN PATENT APPLICATION

(11) **EP 2 290 486 A1**
(43) Date of publication of application: **02.03.2011**
(21) Application number: 09252103.8
(22) Date of filing: 28.08.2009
(51) Int. Cl.: G05B 19/401

(54) **Machine tool calibration method**

(71) Applicant: Renishaw plc, Wotton-Under-Edge Gloucestershire GL12 8JR (GB)
(72) Inventor: The designation of the inventor has not yet been filed
(74) Representative: Dunn, Paul Edward

(57) **Abstract**

A method is described for calibrating or checking the calibration of a machine tool that comprises a first pan (8) that is moveable relative to a second part (4). The first parr (8) of the machine tool comprising a calibration device (19) having at least a first calibration artefact (20;30) and a second calibration artefact (22;32). The second part (4) of the machine tool comprising a measurement probe (18). The method includes the step of using the measurement probe (18) to measure the position of a plurality of points on the surface of each of the first and second calibration artefacts. These measurements are used to establish a position of the first calibration artefact and a position of the second calibration artefact. A reference measurement point (I) is then defined for the calibration device (19) that has a fixed position relative to the established positions of the first and second calibration artefacts. The calibration artefacts may comprise spheres.

## Description

The present invention relates to machine tool calibration, and in particular to an improved method for calibrating or checking the calibration of a machine tool using a calibration device comprising at least first and second calibration artefacts.

Computer numerically controlled (CNC) machine tools are well known and arc used in a wide variety of manufacturing industries. It is now common for such machine tools to include spindles or mills carried by swivel heads and/or multiple-axis rotary tables for holding a workpiece. The operation of such machine tools under computer control allows complex parts to be machined using totally automated processes. Machine tools of this type are also increasingly being used with measurement probes to enable the automated inspection of parts that have been cut. The measurement probe is typically loaded into the spindle of the machine tool when a measurement cycle is required and then moved relative to the workpiece by the machine tool to allow multiple points on the surface of that workpiece to be measured. Although a machine tool is typically manually precalibrated by a skilled operative during its manufacture, this process is time consuming and prone to human error. It is also desirable for an end user to perform additional automated calibration processes. This is especially the case when using a machine tool to implement high accuracy machining and/or measurement cycles.

An example of a machine tool calibration process that employs a measurement probe is outlined in WO2007/068912. In particular, various of the methods outlined in WO2007/068912 allow one or more axes of rotation to be established by measuring the position of a feature, such as a calibration sphere, in two or more different rotational orientations. This can be used to find, for example, the spindle centre line and/or the position of the axis or axes of rotation of a swivel head or swivel table machine.

It has also been described previously in EP1696289 how positional errors associated with machine tool movement can be established by comparing a measured sphere centre position with a nominal sphere centre position calculated by the controller of the machine tool. In particular, EP1696289 describes mounting a single measurement sphere of known dimensions to the rotary table of a machine tool. A measurement probe is used to measure multiple points on the sphere surface from which the position of the centre of the sphere is determined. The rotary table is then rotated a known distance under the control of the controller. The controller calculates a new (nominal) position of the sphere centre based on the known distance the table is moved. The sphere centre position is re-measured using the measurement probe and the difference between the measured and nominal sphere centre positions provides a positional deviation error; i.e. a measure of how accurately the controller can define positions.

Although a method as described in EP 1696289 allows certain machine tool errors to be assessed, such a method has been found by the present inventors to have the disadvantage that the calibration sphere must be placed in a desired location on a moving part of the machine tool to a very high level of accuracy in order to accurately establish certain types of positional errors. In particular, the failure to correctly position the sphere has been found to reduce the measurement accuracy in certain circumstances.

According to a first aspect of the present invention, a method is provided for calibrating or checking the calibration of a machine tool that comprises a first part that is moveable relative to a second part, the first part of the machine tool comprising a calibration device that comprises at least a first calibration artefact and a second calibration artefact, the second part of the machine tool comprising a measurement probe, wherein the method comprises the steps of;
(i) using the measurement probe to measure the position of a plurality of points on the surface of each of the first and second calibration artefacts;
(ii) using the measurements of step (i) to establish a position of the first calibration artefact and a position of the second calibration artefact; and
(iii) defining a reference measurement point for the calibration device that has a fixed position relative to the positions of the first and second calibration artefacts established in step (ii).

The present invention thus comprises an improved method for calibrating or checking the calibration of a machine tool. It should be noted that the term machine tool refers to a machine that machines (e.g. cuts and/or mills parts) and does not include dedicated coordinate measuring machines (CMMs) that perform solely a measurement function. The machine tool includes, when implementing the present invention, a first part comprising a calibration device that is moveable relative to a second part that comprises a measurement probe. In a preferred embodiment described in more detail below, the first part comprises a rotary table to which is attached a calibration device comprising first and second calibration spheres. In such an example, the second part may comprise a measurement probe held in the machine tool spindle.

In step (i) of the present method, the measurement probe of the second part of the a machine tool is used to measure the position of a plurality or set of points on the surface of the first calibration artefact and also a plurality or set of points on the surface of the second calibration artefact. This measurement process may involve moving the first part and/or the second part of the machine tool to allow the measurement probe to adopt the required surface sensing relatioriship(s) with the calibration artefacts. This may, for example, comprise bringing a stylus tip of the measurement probe into contact with points on the surface of the calibration artefacts of the calibration device. These sets of acquired surface points, which arc measured in the machine coordinate system, are used in step (ii) to establish a position of the first calibration artefact and a position of the second calibration artefact respectively. If the calibration artefacts are spheres, the position of the sphere centres may be determined in this step from the multiple surface position measurements using a sphere best-fit process.

After the positions of the first and second calibration artefacts have been found in step (ii), a step (iii) is performed in which a reference measurement point is defined that has a fixed position relative to the positions of the first and second calibration artefacts. In other words, a reference measurement point is defined in a local coordinate system with respect to the measured positions of the first and second calibration artefacts. This reference measurement point may, for example, be defined as a point that lies a certain distance between the positions (e.g. sphere, centres) of the first and second calibration artefacts that have been established in step (ii). The reference measurement point defined in the local coordinate system in step (iii) will thus move in the machine coordinate system with the first part of the machine tool.

The ability to establish a reference measurement point for the calibration device in accordance with the present invention that is away from, but has a known position restive to, the calibration artefacts has a number of significant advantages. In particular, the reference measurement point can be set to any desired position relative to the calibration artefacts of the calibration device. This has the advantage of allowing positions or positional errors to be found for required locations within the working volume of the machine tool without the need to accurately position the calibration device. For example, positional errors may be determined relative to a certain plane or at a certain radius from an axis of rotation as described in more detail below. This permits errors in position to be measured in regions of the machine where measurements are to be made or where features in work pieces are to be cut.

The method of the present invention may be implemented using a machine tool of any known type. Preferably, the first part of the machine tool is rotatable relative to the second part of the machine tool about at least one axis of rotation. The at least one axis of relative rotation between the first and second parts may be provided by the first part and/or the second part of the machine tool including at least one rotary axis. The first part of the machine tool may conveniently comprise a rotary unit, such as a rotary table, trunnion or cradle. The rotary unit may be rotatable about one axis, two axes or more than two axes. The second part may, for example, comprise a swivel head unit. The swivel head unit may be rotatable about one axis, two axes or more than two axes.

If the first part is rotatable relative to the second part, the measurements taken in step (i) may conveniently be performed with the first part of the machine tool rotated into a first orientation with respect to the second part of the machine tooL In other words, the relative angular orientation between the first and second parts of the machine tool is preferably fixed whilst the measurements of step (i) arc acquired. Non-rotary movement between the first and second parts, e.g. relative motion along a plurality of linear axes, may then be used during step (i) to bring the measurement probe into the required surface sensing relationships with the calibration device to enable the plurality of points on the surface of each of the first and second calibration artefacts to be measured.

Preferably, the method comprises the step of rotating the first part of the machine tool relative to the second part of the machine tool about at least one axis of rotation, the first part of the machine tool thereby being placed in a second orientation with respect to the second part of the machine tool. A step may then be performed of using the measurement probe to measure the position of a plurality of points on the surface of each of the first and second calibration artefacts. These surface measurements may then be used to establish a now position of the first calibration artefact and a new position of the second calibration artefact. A new position of the reference measurement point as defined in step (iii) may then be advantageously determined from the new positions of the first and second calibration artefacts. In other words, the reference measurement point has an invariant position in the local coordinate system (i.e. as defined relative to the first and second calibration artefacts) and its new position in the machine coordinate system is found with the first and second parts of the machine tool placed in the second orientation.

Advantageously, the machine tool comprises a controller. The controller conveniently performs a step of calculating anew nominal position of the reference measurement point due to rotation of the first part of the machine tool into the second orientation relative to the second part of the machine tool. The method preferably also comprises the step of comparing the new position of the reference measurement point determined from the new positions of the first and second calibration artefacts with the new nominal position of the reference measurement point calculated by the controller. This comparison step may be performed by the controller. The comparison step may comprise calculating a difference in position between the positions of the measured and nominal reference measurement points. In other words, nominal (controller predicted) and actual (measured) reference measurement points may be compared to establish positional errors associated with the machine's geometric imperfections, thermal growth or controller. The difference in position may be calculated as an offset vector or as a resultant distance between the nominal and measured reference measurement points. This difference in position may be used as a measure of the accuracy of controller calibration or may be stored (e.g. by the controller) as a connection or calibration factor that is used to correct subsequent measurements.

The first part of the machine tool is preferably rotatable relative to the second part of the machine tool about a first axis of rotation. The first part of the machine tool may also be rotatable relative to the second part of the machine tool about a second axis of rotation. The method may comprise an initial step of measuring the location of the first axis of rotation and/or the location of the second axis of rotation of the machine tool in the machine tool coordinate system. Step (iii) of the method may conveniently comprise defining a reference measurement point that lies on a predetermined plane in the machine tool coordinate system. The predetermined plane preferably contains the first axis of rotation. Advantageously, the step of placing the first part of the machine tool in a second orientation with respect to the second part of the machine tool comprises a rotation about the second axis of rotation. The second axis of rotation of the machine tool is preferably orthogonal or at least approximately orthogonal to the first axis of rotation. The first axis of rotation may be what is often called the C-axis of the machine tool and the second axis of rotation may be the so-called B-axis of rotation.

The first and second parts of the machine tool are preferably moveable relative to each other along a plurality of linear axes. For example, the machine tool may allow the first part to be moved or driven along three mutually orthogonal linear axes relative to the second part. Step (i) of the method thus preferably comprises linearly translating the first part of the machine tool along a plurality of axes relative to the second part of the machine tool to enable the measurements probe to measure the required plurality of points on the surface of each of the first and second calibration artefacts. This relative motion between the first and second parts of the machine tool may be provided by movement of the first part along one or more axes and/or movement of the second part along one or more axis. The first part may remain stationary whilst the second part is moved during step (i), or vice versa. The machine tool may comprise one or more drive motors to provide such movement of the first and/or second parts.

Conveniently, step (i) of the method can be performed with the calibration device placed in a first location. In other words, the first part of the machine tool may be held stationary in the first location (e.g. the first part may comprise a table that is rotated or translated into a first position) whilst the measurements of step (i) are taken. In such an example, step (i) may thus comprise moving the second part of the machine tool to bring the measurement probe into the required surface sensing relationships with the first and second calibration artefacts. The method may then comprise the further step of moving the first part of the machine tool to place the calibration device in a second location; e.g. rotating or moving a table into a second position. A step may then be conveniently performed of using the measurement probe to measure the position of a plurality of points on the surface of each of the first and second calibration artefacts from which a new position of the first calibration artefact and a new position of the second calibration artefact can be established. A new position of the reference measurement point as defined in step (iii) may then be determined from the new positions of the first and second calibration artefacts. In such a method, step (i) preferably comprises moving the second part of the machine tool along at least one axis, and more preferably along three mutually orthogonal axes, to enable the measurement probe to measure the plurality of points on the surface of each of the first and second calibration artefacts.

The first and second calibration artefacts may be calibration artefacts of any suitable form. The first and second calibration artefacts may be differently shaped or nominally identical. Each calibration artefact may, for example, comprise a sphere, ring, cube, cuboid, bore, boss etc. Advantageously, a position of each calibration artefact can be unambiguously established by measuring a plurality of points on that artefact. The calibration device may comprise only the first and second calibration artefacts. Alternatively, the calibration device may comprise one or more further calibration artefacts in addition to the first and second calibration artefacts.

Advantageously, the first calibration artefact comprises a first sphere. Preferably, the second calibration artefact comprises a second sphere. The first sphere is conveniently spaced apart from the second sphere. In such an example, the position of the first calibration artefact may comprise the position of the centre of the first sphere and the position of the second calibration artefact may comprise the position of the centre of the second sphere. In other words, the sphere centres may define the positions of the calibration artefacts. The use of a sphere as the calibration artefact is advantageous because a sphere centre can, as would be appreciated by a person skilled in the art of machine tool metrology, be easily determined from a minimal number of measured points on the sphere surface.

Advantageously, the defined reference measurement point of step (iii) is located on a line passing through the positions of the first and second calibration artefacts established in step (ii). For a calibration device comprising first and second spheres, the defined reference measurement point of step (iii) is thus preferably located on a line passing through the centres of the first and second spheres. The defined reference measurement point may be located at a point on the line projected through the sphere centres that does not lie between the sphere centres. Advantageously, the defined reference measurement point is located between the centres of first and second spheres.

The calibration device may comprise first and second calibration artefacts that arc separately mounted to the machine tool. Advantageously, the calibration device comprises a base plate that is attachable to the machine tool, wherein the first and second calibration artefacts arc affixed to the base plate. Preferably, the first and second calibration artefacts have a substantially invariant position relative to the base plate; i.e. they arc preferably immoveable relative to one another and to the base plate. The calibration device may, for example, comprise two spheres attached to the base plate by two stalks. It should be noted that the spacing between the first and second calibration artefact docs not need to be known or precalibrated.

Preferably, the positions of the first and second calibration artefacts arc established in three dimensions. For example, the position of each calibration artefact (e.g. a sphere centre position) may be found in three mutually orthogonal machine (x,y,z) axes. Although artefact positions are preferably defined in three axes, it would also be possible to perform the same measurement in only two axes.

The second part of the machine tool preferably comprises (e.g. carries) a contact measurement probe having a deflectable stylus. The contact measurement probe may be a touch trigger probe that issues a trigger signal when a certain stylus deflection threshold is exceeded or a so-called analogue or scanning probe that outputs a measure of stylus deflection. If a touch trigger probe is used, step (i) may comprise bringing the stylus into contact with different points on the surface of the calibration artefacts. If an analogue probe is used, step (i) may comprise scanning the stylus of the measurement probe along the surface of the calibration artefacts. Alternatively, a non-contact (e.g. optical, inductive, capacitive) measurement probe may be carried by the machine. The machine tool may also comprise a tool autochange system that allows a measurement probe and cutting tools to be automatically loaded into a spindle of the second part of the machine tool for measurement and cutting cycles respectively.

A method for calibrating or checking the calibration of a machine tool is thus described herein that comprises the steps of; (a) providing a calibration device on a moveable part of the machine tool, the calibration device comprising at least a first calibration artefact and a second calibration artefact, (b) using a measurement probe carried by the machine tool to measure the position of a plurality of points on the surface of each of the first and second calibration artefacts and establishing therefrom a position of the first calibration artefact and a position of the second calibration artefact, (c) defining a reference measurement point for the calibration device that has a fixed position relative to the positions of the first and second calibration artefacts established in step (b), (d) moving the moveable part of the machine tool, (e) using the measurement probe to measure the position of a plurality of points on the surface of each of the first and second calibration artefacts and establishing therefrom a new position of the first calibration artefact and a new position of the second calibration artefact, and (f) determining a new position of the reference measurement point as defined in step (c) from the new positions of first and second calibration artefacts measured in step (e).

A method is also described herein for calibrating or checking the calibration of a machine tool, the method comprising the steps of; (a) providing a calibration device on a moveable part of the machine tool, the calibration device comprising at least a first calibration sphere and a second calibration sphere, (b) using a measurement probe carried by the machine tool to measure the position of a plurality of points on the surface of each of the first and second calibration spheres and establishing therefrom the position of the centres of the first and second calibration sphere, (e) defining a reference measurement point for the calibration device that has a fixed position relative to the centres of the first and second calibration sphere as established in step (b), (d) moving the moveable part of the machine tool, (c) using the measurement probe to measure the position of a plurality of points on the surface of each of the first and second calibration spheres and establishing therefrom a new position of the centres of the first and second calibration spheres, and (f) determining a new position of the reference measurement point as defined in step (c) from the new positions of the centres of the first and second calibration spheres as established in step (c).

The invention will now be described, by way of example only, with reference to the accompanying drawings in which;
Figure 1 illustrates a machine tool having a rotary table,
Figure 2 shows a calibration device of the present invention carried by a dual axis rotary table,
Figures 3a and 3b show side and plan views of the calibration device of figure 2 in the machine coordinate system,
Figure 4 illustrates defining the reference measurement point in the Y=0 plane,
Figure 5 shows the position of the reference measurement point relative to the two calibration spheres.
Figure 6 illustrates rotation of the table and calibration device about the B-axis,
Figure 7 shows the difference in actual and measured reference measurement points following the rotation shown in figure 6,
Figure 8 illustrates an alternative method in which positional errors can be found at an arbitrary radius from an axis of rotation, and
Figure 9 shows a difference in the measured and nominal positions of the reference measurement point of figure 8.

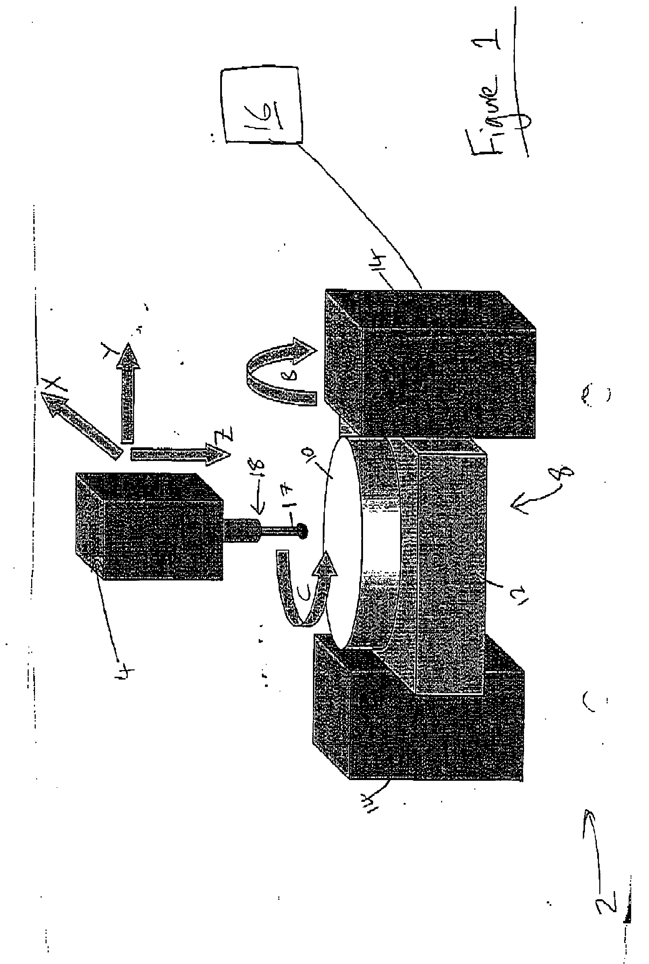

Referring to figure 1, a machine tool having a first part comprising a two-axis rotary table 8 and a second part comprising a head unit 4 is schematically illustrated. It should be noted that, as explained below, the machine tool configuration illustrated in figure 1 is merely one example of the many different machine tool configurations that are known to those skilled in the art and to which the method of the present invention could be applied.

The machine tool 2 comprises a head unit 4 that can be driven around the machine working space along mutually orthogonal x, y and z axes. The position of the head 4 is measured by high accuracy position encoders (not shown) provided on each of the linear (x,y,z) machine axes. The machine tool 2 also comprises a two-axis rotary table 8. The table 8 comprises a table top 10 onto which a workpiece or part can be placed and secured. The table top 10 can in turn be driven to rotate about the C-axis. The table top 10 is mounted to a carriage 12 which can be driven to rotate about the B-axis relative to parts 14 of the machine. Rotary encoders are also provided to measure the angles adopted by the B and C axes. Movement of the head 4 along the x, y and z axes and rotation of the table about the B and C axes is controlled by a computer numeric controller (CNC) 16, or controller 16 for short.

The head unit 4 of figure 1 is shown carrying a measurement probe 18 that has a workpiece contacting stylus 17. The measurement probe may be touch trigger probe that issues a trigger signal whenever a stylus deflection threshold is exceeded or it may comprise an analogue probe that outputs data describing the amount of stylus deflection. Although a contact measurement probe is shown, it should be noted that a non-contact (e.g. optical, capacitive, inductive etc) measurement probe could alternatively be used.

Movement of the head 4 along the x, y and z axes is used to bring the stylus 17 into contact with an object (e.g. a workpiece to be inspected) mounted to the table top 10 in order to measure the position of points on the object surface. The acquisition of object surface measurements in this manner is well known to those skilled in the art. It should also be noted that the measurement probe is typically carried by the head only during measurement cycles; during machining cycles the head carries the appropriate tool or tools that arc used to cut the part.

Machine tools arc often sold with a controller that stores calibration information or tables. In particular, machine tool manufacturers or suppliers typically manually calibrate machine tools prior to sale (e.g. using interferometric techniques etc) to enable parts to be machined to the dimensions specified in the cutting programs that are run by end users. Although manufacturer calibration data is adequate for many applications, the creation of some aspects of the calibration data, where present can be very time consuming. Errors can additionally arise over time or if the machine tool is reconfigured or disturbed. It is for these reasons that various recalibration or calibration checking routines have been developed for end users or service engineers that use a measurement probe carried by the machine tool.

As mentioned above, one example of a calibration checking routine is described in EP1 696289. In this technique, the position of the centre of a sphere of known dimensions is measured using a measurement probe installed on the machine tool. The machine tool then moves the sphere by a known amount (i.e. based on the calibration data and encoder reading received by the controller) and the machine tool controller calculates the new nominal sphere centre position; i.e. the machine tool controller calculates where the sphere centre should be located after the move. The actual sphere centre position is then re-measured using the measurement probe. The difference between the actual and nominal sphere centres provides a positional deviation value. This position deviation values provides a measure of the accuracy of the machine tool calibration. In other words, a small position deviation value means the sphere has moved by the amount predicted by the controller and the calibration is good. A large position deviation values means that the sphere has moved to a position not expected by the controller and the calibration is poor.

The method described in EP1696289 has been found by the present inventors to have a number of drawbacks. In particular, the positional deviation values determined using the method arc valid only for the region of the machine tool working space in which they are measured; this is not necessarily the region where a workpiece is to be cut or measured. Any positional deviations values that arc measured using this prior technique, especially those associated with rotary movement, may thus be different to the positional deviations that actually occur in the region of the machine working space where a part is cut or measured. The calibration sphere may be placed in different locations on the moveable parts of the machine tool, but the requirement to accurately place the sphere in a desired position (e.g. to intersect a plane or axis) is time consuming and impractical for quick calibration or calibration checking processes.

The present inventors have thus devised an improved technique in which a calibration device to a part of the machine tool is provided that incorporates at least two calibration artefacts, such as two calibration spheres. Each calibration artefact unambiguously defines a position and a reference measurement point can thus be set that has a fixed position relative to the positions of the calibration artefacts (e.g. the sphere centre positions). This reference measurement point may be selected to intersect a certain plane or axis of the machine tool as required. The reference measurement point can be found (i.e. re-measured) when the machine tool is re-orientated or the calibration device is moved and compared with a nominal reference measurement point as calculated by the controller following the move. This provides an indication of any machine errors. An example of this method will now be described.

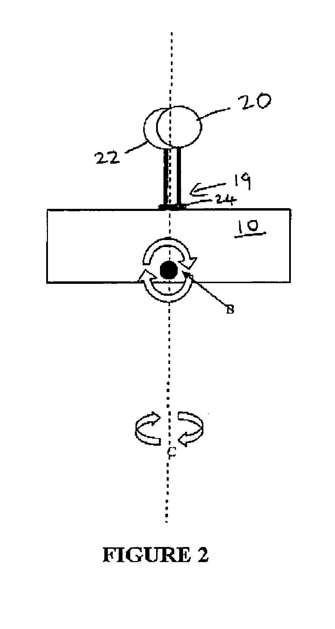

Referring to figure 2, a calibration device 19 is shown that comprises a first calibration artefact in the form of a first calibration sphere 20 and a second calibration artefact in the form of a second calibration sphere 22. The first and second spheres 20 and 22 arc spaced apart from one another and mounted to a base plate 24. The base plate 24 is mounted to the table top 10 of a dual axis rotary table of the type described with reference to figure 1 above. The B and C axes of rotation of the rotary table arc also shown. It should be noted that the first and second spheres 20 and 22 are preferably high precision spheres, but it is not necessary to know the sphere dimensions or relative spacing accurately

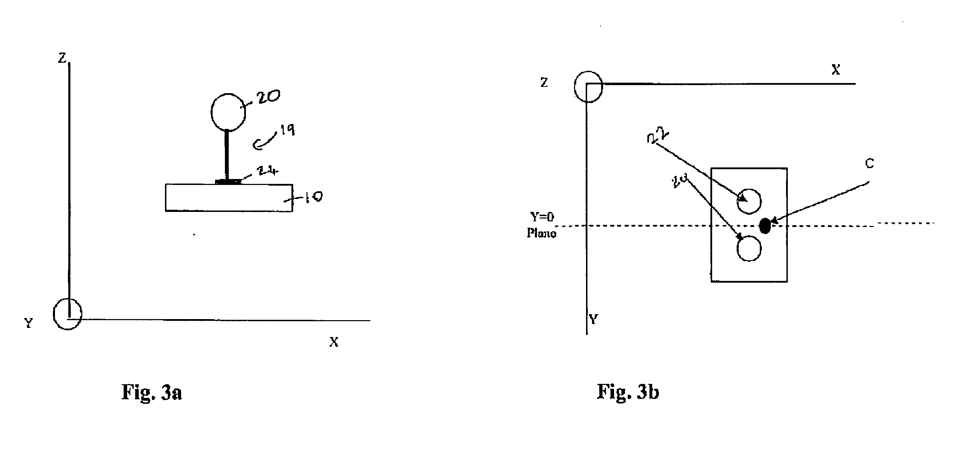

Figures 3a and 3b show side and plan views of the calibration device 19 and table top 10 of figure 2 in the machine (X,Y,Z) coordinate system. In particular, figure 3a shows a side-on view of the calibration device in the x-z plane and figure 3b shows a top view of the calibration device in the x-y plane. In figure 3b the first and second calibration spheres 20 and 22 are shown and it can be seen that they are spaced apart from one another.

A machine tool may have been sold with the position of the C-axis in the machine (X,Y,Z) coordinate system of the machine pre-measured. Preferably, the presently described method includes a first step of measuring or re-measuring this C-axis position. In particular, the C-axis position may be found by measuring the centre of one of the calibration spheres, rotating the calibration device through 180° about the C-axis (keeping the B-axis locked) and then re-measuring the sphere centre position. The mid-point of the two sphere centre measurements gives the position of the C-axis of rotation. Such a process for finding the position of the C-axis is described in more detail in WO2007/068912. A current or updated position of the C-axis, in the X,Y,Z co-ordinate system of the machine, is thus found as shown in figure 3b. As mentioned above, re-measuring the position of the C-axis is optional and the position determined by the machine tool builder may be used instead.

Most machine tools provide motion along mutually orthogonal X, Y, Z axes that are typically defined to a very high level of accuracy by the machine tool manufacturer; for example, using laser calibration techniques. The X-Z plane is thus found that includes the measured C-axis and this X-Z plane is defined as the Y=0 plane; this plane is also illustrate in figure 3b. It should be noted that the calibration device 19 need only be placed in the approximate vicinity of the c-axis (e.g. somewhere near the middle of the rotary table). There is no need to accurately place the calibration device in a certain position on the rotary table.

The positions of the centres of the first and second calibration spheres 20 and 22 of the calibration device are then measured with the table positioned at a first B-axis rotational angle (e.g. B=0°). The sphere centre positions may be found in a conventional manner by measuring a plurality of points on the surface of each sphere using the measurement probe carried by the machine tool. A sphere fitting process may then be performed to calculate the sphere centre positions.

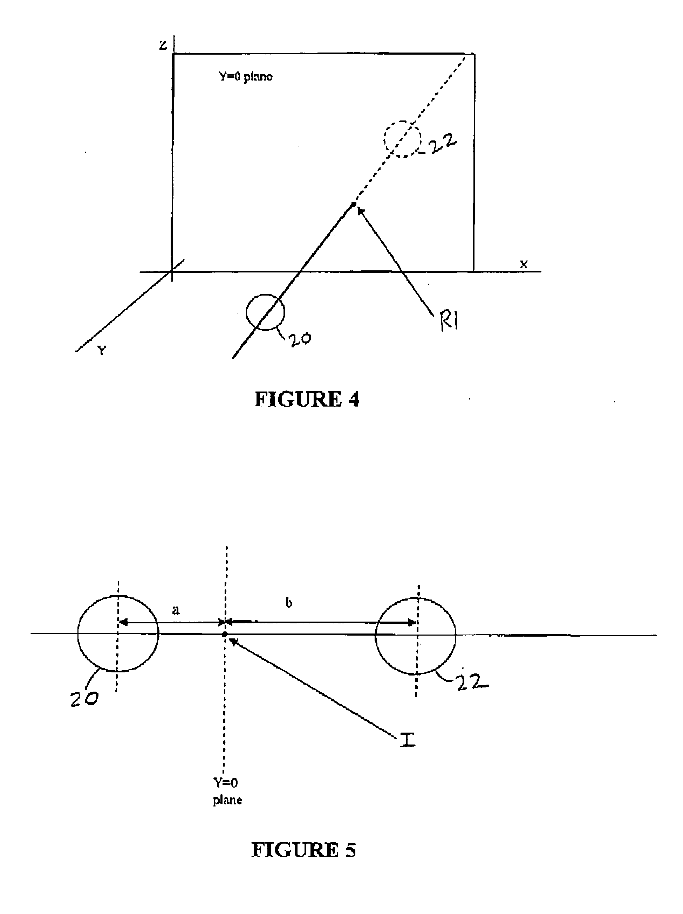

Referring also to figure 4, once the centres of the first and second calibration spheres have been found, a line is projected between the two sphere centres. The point R1 at which the line intersects the Y=0 plane is then found; i.e. the position in the machine coordinate system is found at which the line between the sphere centres interseets the Y-0 plane. In other words, the position of the point R1 is found in x, y(=0), and z coordinates.

Referring to figure 5, the point I at which the line joining the sphere centres intersects the Y=0 plane is also described in a local coordinate system that is defined relative to the sphere centres. In particular, figure 5 illustrates how the position of the intersection point 1 is located a first distance a from the first calibration sphere 20 and a second distance b from the second calibration sphere 22. The distances a and b are measured along the line joining the sphere centres.

The position of the intersection point I may be stored as an absolute distance value (e.g. the value of distance a and/or b may be stored) but is preferably stored as a ratio of the position of the point along the line joining the sphere centres. For example, a value could be stored that defines the intersection point I as being located at the position a/(a+b) along the line joining the sphere centres. Storing a ratio in this manner means it is possible to calculate a projected position along the line between the spheres. An example of this can be seen in figure 5 where the ratio along the Y axis is used to determine the projected XYZ position at the Y=0 plane.

It should be noted that, with the table positioned at the first B-axis rotational angle, the point R1 is in the same position in space as point I. This same position is simply described in both the machine coordinate system and a local (artefact) coordinate system.

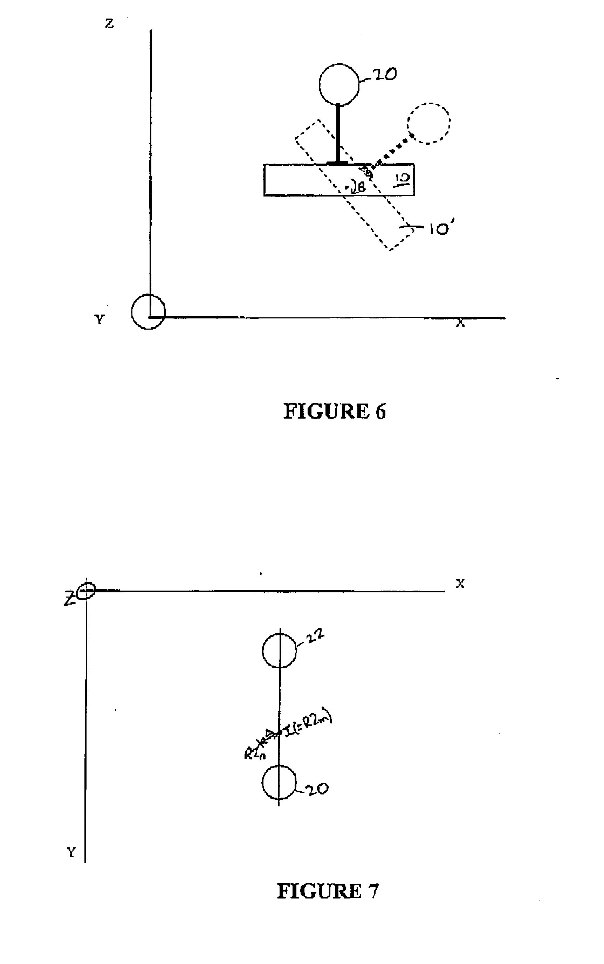

Referring to figure 6, the machine tool rotates the table about the B-axis by a certain known angle. The table 10' and calibration device are thus placed in a second B-axis rotational position; this second B-axis position is shown in dashed outline in figure 6. The measurement probe carried by the machine tool is used to again measure the position of multiple points on the surfaces of the first and second calibration spheres 20 and 22 in this new B-axis orientation. The new positions of the centres of the first and second calibration spheres 20 and 22 are then established by a fitting process.

Referring to figure 7, the geometry with the table located in the second B-axis, position is shown. As described with reference to figure 5, the point I is defined in a local coordinate system relative to the sphere centre positions. Point I will thus have moved as the calibration device was rotated. The new potion of point I can thus be found using the re-measured sphere centre positions and the previously stored value that defines the location of paint I along the line joining the sphere centres. The new position of point 1 in the machine coordinate system is denoted R2ₘ in figure 7.

The machine tool controller is also programmed to calculate a nominal position R2ₙ by adding a nominal or calculated change in the position of the point I due to the B-axis rotation to the previously measured position R1. In other words, the machine tool controller calculates, in machine coordinates, where the point 1 should be located after the table is rotated about the B-axis by the specified angle. A difference, or positional error, Δ can then be found between the measured R2ₘ and nominal R2ₙ values.

The process may then be repeated at one or more additional B-axis orientations to build up an error or compensation table. This table can be used to correct subsequent machine moves (for the purposes of improving cutting accuracy) or measurements taken using a measurement probe. Alternatively, the error table may simply be used to assess whether a mechanical repair or full machine tool recalibration is needed.

The present invention can thus be seen to have the advantage that an error can be found at the Y-0 plane (i.e. the plane that includes the other axis of rotation C). This provides accurate calibration data for correcting rotations about the B-axis at the optimum reference position relative to the C-axis. In particular, there is no need for accurate artefact location using this method and, irrespective of set-up, correction data can be centred on a required plane or axis of rotation.

It should also be noted that if such accuracy was required using only a single sphere, that sphere would have to be very accurately positioned so that its centre lay on the Y-0 plane. This would require the use, for example, of a dial test indicator (having it's own inherent inaccuracies) or the like thereby greatly increasing the complexity of the measurements. Alternatively, a single sphere could be rotated into two positions to provide a second virtual sphere; this would, however, have the disadvantage that the accuracy would then be highly dependent on the accuracy of the C-axis orientation. The use of a two sphere calibration device in accordance with the present invention can thus be seen to be advantageous over single sphere approaches and in particular it does not require a complex setup process or precise knowledge about the position or orientation of an axis of rotation.

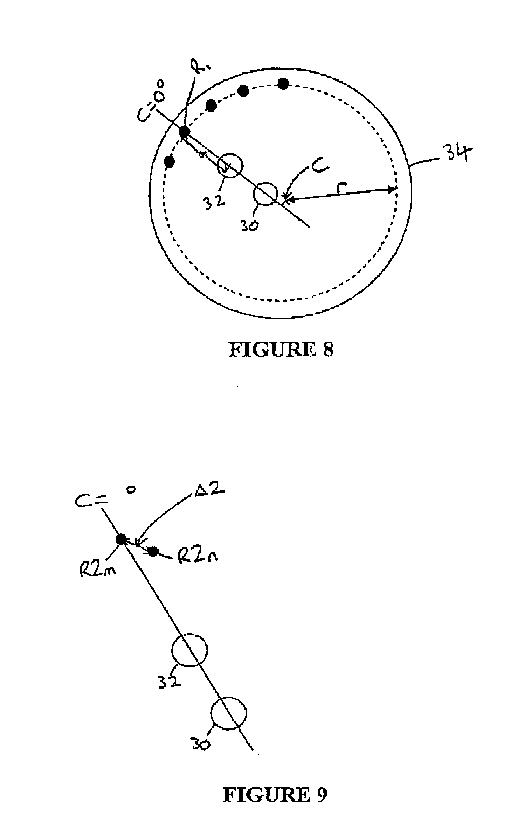

Referring to figures 8 and 9, a further method of the present invention is described that also uses the idea of projecting a line through the two sphere centres to any convenient projected radius. The method comprises mounting a calibration device comprising a first calibration sphere 30 and second calibration sphere 32 to a machine tool table 34 that is rotatable about a C-axis. The rotary table 34 is placed in a first angular orientation (e.g. C=0°) as shown in figure 8. A measurement probe is used to measure multiple points on the surfaces of the first sphere 30 and the second sphere 32 from which the position of the centres of the first and second spheres is calculated in a known manner. A line is projected through the measured sphere centres and a point R1 is defined at a certain radius r from the C-axis of table rotation. The distance a from the centre of the second sphere 32 to the point R1 is also recorded.

The rotary table 34 is rotated by an angle, say 10°, about the c-axis. The position of the centres of the first sphere 30 and the second sphere 32 are again found by measuring multiple points on the sphere surfaces. A line is projected through the newly measured sphere centres and the position of a point R2ₘ located a distance a from the centre of the second sphere 32 is found. The controller of the machine tool also calculates a nominal position R2ₙ that would result from the C-axis rotation of the point R1. A difference, or positional error, A2 can then be found between the measured R2ₘ and nominal R2ₙ values. This is shown in figure 9.

This process is repeated at multiple C-axis orientations thereby building up a map of positional errors that occur at a radial distance r from the C-axis of rotation. In this manner, positional errors can be found at any desired radial distance from an axis of rotation without having to accuracy place a calibration artefact at that radial position.

This method also has the advantage that it is possible to provide positional error information about points on multiple radii from one measurement operation. For example, errors could be mapped at the table centre (r=0) and also at the outer edge (e.g. r = 300mm). Doing this with a single sphere would require multiple tests to be conducted and would also depend on the accurate positioning of the sphere. In contrast, these errors can be found from a single set of measurements of the pair of spheres using the presently described method.

The above examples arc merely illustrative of the present invention. The skilled person would be aware of the many modifications and variants of the above examples that are encompassed by the present invention. In particular, it is important to note that although the above specific examples describe a machine tool having a first part that comprises a two-axis rotary table and second part that is moveable along three mutually orthogonal linear axes, the method may be used with a wide variety of different machine tool configurations. It would be possible, for example, to implement the method using a machine tool in which the second part provides one or more axes of rotation; e.g. the second part may comprise a single axis or multiple axis swivel head unit. The first part of the machine tool that comprises the calibration device may also comprise only one or no rotary axes and/or may be translatable along one or more linear axes. In fact, the first part may even remain completely stationary when implementing the method on machine tools where all relative linear and rotary movement between the first and second parts is provided solely by movement of the second part of the machine tool. The various terms that are used above to describe the different axes of rotation of the machine tool are also not intended to in any way limit the applicability of the various methods and are provided purely to aid understanding.

## Claims

1. A method for calibrating or cheeking the calibration of a machine tool that comprises a first part that is moveable relative to a second part, the first part of the machine tool comprising a calibration device that comprises at least a first calibration artefact and a second calibration artefact, the second part of the machine tool comprising a measurement probe, wherein the method comprises the steps of;
(i) using the measurement probe to measure the position of a plurality of points on the surface of each of the first and second calibration artefacts;
(ii) using the measurements of step (i) to establish a position of the first calibration artefact and a position of the second calibration artefact; and
(iii) defining a reference measurement point for the calibration device that has a fixed position relative to the positions of the first and second calibration artefacts established in step (ii).

2. A method according to claim 1, wherein the first part of the machine tool is rotatable relative to the second part of the machine tool about at least one axis of rotation, wherein the measurements of step (i) arc performed with the first part of the machine tool rotated into a first orientation with respect to the second part of the machine tool.

3. A method according to claim 2, comprising the further steps of:
rotating the first part of the machine tool relative to the second part of the machine tool about at least one axis of rotation, the first part of the machine tool thereby being placed in a second orientation with respect to the second part of the machine tool;
using the measurement probe to measure the position of a plurality of points on the surface of each of the first and second calibration artefacts and establishing therefrom a new position of the first calibration artefact and a new position of the second calibration artefact; and
determining a new position of the reference measurement point as defined in step (iii) from the new positions of the first and second calibration artefacts.

4. A method according to claim 3, wherein the machine tool comprises a controller that performs the step of calculating a new nominal position of the reference measurement point due to rotation of the first part of the machine tool into the second orientation relative to the second part of the machine tool.

5. A method according to claim 4, comprising the step of comparing the new position of the reference measurement point determined from the new positions of the first and second calibration artefacts with the new nominal position of the reference measurement point calculated by the controller.

6. A method according to any one of claims 3 to 5, wherein the first part of the machine tool is rotatable relative to the second part of the machine tool about a first axis of rotation and a second axis of rotation, wherein the step of placing the first part of the machine tool in a second orientation with respect to the second part of the machine tool comprises a rotation about only the second axis of rotation.

7. A method according to any one of claims 2 to 6, wherein the first part of the machine tool is rotatable relative to the second part of the machine tool about a first axis of rotation, wherein step (iii) comprises defining a reference measurement point that lies on a predetermined plane in the machine tool I coordinate system that contains the first axis of rotation.

8. A method according to any preceding claim, wherein the first part of the machine tool comprises a rotary unit and/or the second part of the machine tool comprises a swivel head unit.

9. A method according to any preceding claim, wherein step (i) comprises linearly translating the first part of the machine tool along a plurality of axes relative to the second part of the machine tool to enable the measurement probe to measure the plurality of points on the surface of each of the first and second calibration artefacts.

10. A method according to claim 1, wherein step (i) is performed with the calibration device in a first location and the method comprises the additional steps of;
moving the first part of the machine tool thereby placing the calibration device in a second location;
using the measurement probe to measure the position of a plurality of points on the surface of each of the first and second calibration artefacts and establishing therefrom a new position of the first calibration artefact and a new position of the second calibration artefact; and
determining a new position of the reference measurement point as defined in step (iii) from the new positions of the first and second calibration artefacts.

11. A method according to any preceding claim, wherein the first calibration artefact comprises a first sphere end the second calibration artefact comprises a second sphere, the position of the first calibration artefact established in step (ii) comprising the position of the centre of the first sphere and the position of the second calibration artefact established in step (ii) comprising the position of the centre of the second sphere.

12. A method according to claim 11, wherein the defined reference measurement point of step (iii) is located on a line passing through the centres of first and second spheres.

13. A method according claim 12, wherein the defined reference measurement point is located between the centres of first and second spheres and the defined reference measurement point is stored as a ratio of the distance along the line joining the centres of first and second spheres.

14. A method according to any preceding claim, wherein the calibration device comprises abase plate that is attachable to the machine tool, wherein the first and second calibration artefacts are affixed to the base plate.

15. A method according to any preceding claim, wherein the positions of the first and second calibration artefacts are established in three dimensions.
